# EUROPÄISCHE PATENTSCHRIFT

(11) **EP 1 109 143 B1**
(45) Veröffentlichungstag und Bekanntmachung des Hinweises auf die Patenterteilung: **02.06.2004**
(21) Anmeldenummer: 00126171.8
(22) Anmeldetag: 30.11.2000
(51) Int. Cl.: G08B 25/01, G08B 26/00, G08B 29/06

(54) **Verfahren und Vorrichtung zur Bestimmung von als Stromsenken wirkenden gestörten Meldern in einer Gefahrenmeldeanlage**
Method and device for determining the defective detectors in an alarm system
Procédé et dispositif pour déterminer les détecteurs défectueux dans un système d'alarme

(30) Priorität: 15.12.1999 DE 19960422
(43) Veröffentlichungstag der Anmeldung: 20.06.2001
(73) Patentinhaber: Job Lizenz GmbH & Co. KG, 22926 Ahrensburg (DE)
(72) Erfinder: Röpke, Gerhard, 23570 Lübeck-Travemünde (DE)
(74) Vertreter: Patentanwälte Hauck, Graalfs, Wehnert, Döring, Siemons, Schildberg

(56) Entgegenhaltungen:
- EP-A- 0 178 474
- EP-A- 0 489 346
- US-A- 5 097 259

## Beschreibung

Die Erfindung bezieht sich auf ein Verfahren zur Bestimmung von als Stromsenken wirkenden gestörten Meldern in einer Gefahrenmeldeanlage nach dem Patentanspruch 1 und 6.

Gefahrenmeldeanlagen. z.B. Brandmeldeanlagen, weisen in der Regel eine größere Anzahl von Gefahrenmeldern auf, die an eine zweiadrige Meldeleitung angeschlossen sind. Diese kann als Stich- oder als Ringleitung konzipiert sein, über die die einzelnen Melder mit einer Zentrale kommunizieren. Jeder Melder weist einen Sensor oder dergleichen auf, der in Abhängigkeit von Parametern in seiner Umgehung Meßwerte produziert, die über die Leitung an die Zentrale übertragen werden. Um eine Zuordnung der Meßwerte zu den einzelnen Meldern vornehmen zu können, ist es notwendig, jedem Melder eine Kennung oder eine Adresse zuzuordnen. Diese wird in einem nicht flüchtigen Speicher abgelegt.

Aus DE 196 34 099 A1 ist ein Verfahren zur bidirektionalen Datenübertragung auf einem Bus zwischen Zentrale und den Meldern bekannt geworden, wobei die Zentrale den Master und die Melder die Slaves darstellen und die Übertragung von Datenfolgen vom Master zu den Slaves spannungsgeprägt erfolgt und die Slaves beim Senden das Verhalten von Stromsenken haben. Zur Vergrößerung der Reichweite der Übertragung von den Slaves zum Master wird ein bitsynchrones Verfahren für die Datenübertragung vorgeschlagen. In der Druckschrift ist ferner ausgeführt, daß das Verhalten der bidirektionalen Datenübertragung eine richtungsabhängige Asymmetrie der Übertragungsqualität aufweist. Während die spannungsgeprägte Übertragung vom Master zu den Slaves infolge des stromsenkenden Verhaltens der Slaves dämpfungsfrei erfolgt und daher als qualitativ hochwertig und von geringer Störanfälligkeit und großer Reichweite bezeichnet wird, ist die stromgeprägte Übertragung von den Slaves zum Master von geringerer Qualität. Einige der Ursachen dafür sind, daß die Datenbits wesentliche Änderungen durch das Rauschen im Datenübertragungskanal erfahren. Als weitere Ursache wird der Kapazitätsbelag des Datenübertragungskanals genannt, der zu einer Stromteilung führt, so daß nur ein Bruchteil des von den Slaves erzeugten Stromhubs beim Master (Zentrale) ankommt.

Noch nachteiliger als die oben angeführten Einflüsse, die hauptsächlich auf die Leitungsparameter zurückzuführen sind und negative Auswirkungen auf die Übertragungsqualität der Daten nach sich ziehen, können sich starke Stromsenken auswirken. Eine Stromsenke kann bereits durch einen im Langzeitbetrieb defekt gewordenen Melder hervorgerufen werden. Bei der riesigen Stückzahl der sich Tag und Nacht im Betrieb befindlichen Brandmeldern, ein häufig vorkommender Fall von Meldern in Gefahrenmeldeanlagen, ist es trotz aller Vorkehrungen nicht zu verhindem, daß vor allem nach langer Betriebszeit ein einzelnes Bauteil in einem der vielen Melder zu einem nicht vorhersehbaren Zeitpunkt ausfällt. Sollte dieses Bauteil den Stromfluß des Melders unbeeinflußbar dauerhaft um ein unzulässiges Maß erhöhen, so kann sich dies störend auf den Datenfluß auswirken. Es sind verschieden starke Auswirkungen denkbar, die von der Störung nur eines Melders bis hin zum Ausfall des gesamten Datenverkehrs auf der Meldeleitung führen können.

Im Stand der Technik existiert eine Reihe von unterschiedlich aufgebauten Meldeanlagen. Aus EP 0 111 178 A1 ist bekannt geworden, durch einen von der Zentrale erzeugten Sprung der Abfragespannung auf einen ersten Wert einen Serienschalter zu öffnen und nach einer vom Melderzustand bestimmten Zeit durch einen weiteren Sprung der Abfragespannung auf einen zweiten Wert den Serienschalter zum nächsten Melder durchzuschalten. Diese den Melderzuständen entsprechenden elektrischen Signale werden in der Zentrale nur in vorbestimmten Zeitbereichen ausgewertet. Die dazwischen liegenden Zeitbereiche werden als Störungsbänder definiert. In diese Störungsbänder fallende Signale bewirken eine entsprechende Störungsmeldung in der Zentrale. Die kettenförmige Fortschaltung dient auch der Detektion eines Kurzschlusses in Richtung des nächsten Melders. Die Kurzschlußstelle kann lokalisiert und die Störung daher schnell behoben werden. Trotz Kurzschluß bleibt auf der gesamten Meldelinie die volle Arbeitsspannung erhalten. Nur der Teil der Meldelinie, auf der der Kurzschluß besteht, wird abgeschaltet. In dieser Schrift wird auch die Verwendung von digitalen Daten zur Übertragung erwähnt, wegen der Störanfälligkeit jedoch abgelehnt.

Aus DE 33 46 527 A1 ist ein Verfahren zur störungssichemden Alarmauswertung einer Meldelinie einer Gefahrenmeldeanlage bekannt geworden, bei der in einer Zentrale Meldelinienzustände ausgewertet werden mit Hilfe eines in der Zentrale angeordneten Fensterdiskriminators. Mit einer dem Fensterdiskriminator nachgeschalteten digitalen Störgrößen-Ausblendungseinrichtung wird mit dem Auftreten des Schwellensignals periodisch eine vorgegebene Zeit lang geprüft, ob das Schwellensignal noch ansteht. Erst nach Ablauf dieser vorgegebenen Zeit wird ein Ausgangssignal an eine Meldeauswertevorrichtung gegeben, wobei mit dem Verschwinden des Ereignisses der Prüfvorgang abgebrochen wird und erneut beginnt, wenn erneut ein Schwellensignal ansteht. Für eine bidirektionale digitale Übertragung mit hoher Datenfrequenz ist das bekannte Verfahren nicht geeignet.

Um eine höhere Zuverlässigkeit der Datenübertragung bei Gefahrenmeldeanlagen zu erreichen, ist aus DE 42 12 440 A1 bekannt geworden, ein Übertragungsfehlerfeststellsystem zwischen Zentrale und Melder anzuordnen. Die Datenübertragung im bekannten System erfolgt folgendermaßen: Aussenden von Zugangsdaten in Form einer Spannung von der Zentrale durch eine erste Übertragungsleitung, Rücksendung von Antwortdaten eines Melders, die in den Zugangsdaten bestimmt ist, in der Form eines elektrischen Stromes durch eine zweite Übertragungsleitung während einer Antwortzeitperiode, worin die von der Meldeeinheit zurückgesandten Daten, die auf die von der Zentrale ausgesandten Zugangsdaten geantwortet hat, aus Zustandsdaten des Melders und Prüfsummendaten gebildet werden, die durch Hinzufügen der Melderzustandsdaten zu den Eigenadressdaten erstellt wurden; die Zentrale fügt zu den Melderzustandsdaten die Adressdaten hinzu, es wird bestimmt, ob ein Übertragungsfehler aufgetreten ist, wenn die von dieser Addition festgestellten Daten nicht in Übereinstimmung mit den Prüfsummendaten sind. Mit Hilfe des bekannten Verfahrens soll in erster Linie verhindert werden, daß ein Rauschen auf den Übertragungsleitungen sich als Störung auswirkt.

Aus DE 25 33 382 C1 ist ein Verfahren zur automatischen Zuweisung von Melderadressen bei einer Gefahrenmeldeanlage bekannt geworden. Bei diesem Verfahren findet eine kettenförmige Weiterschaltung der Melder zum Zweck der Adressenvermittlung statt, wobei der Meßwert aus der Zeitverzögerung bis zum Anschalten des nachfolgenden Melders ermittelt wird. Die Weiterschaltung erfolgt durch die im Zuge einer Versorgungsleitung liegenden und in jedem Melder vorhandenen Schalter. Die Melderadresse wird aus der Zahl der vorhergehenden Erhöhung des Linienstroms ermittelt. Zu Beginn eines jeden Abfragezykluses werden die Melder durch eine Spannungsänderung von der Meldelinie abgetrennt.

Aus DE 40 38 992 C1 ist schließlich ein Verfahren zur automatischen Zuordnung von Melderadressen bei Gefahrenmeldeanlagen bekannt geworden, bei der jeder Melder eine Übertragungseinrichtung, einen Meßwertspeicher, einen Adressspeicher und eine Spannungsmeßeinrichtung aufweist sowie einen Schalter zwischen den Adern der Meldeleitung. In einer ersten Phase wird von der Zentrale eine hohe Spannung an die Leitung gelegt, wodurch die Melder mit Energie versorgt werden durch Aufladung eines Kondensators. In einer zweiten Phase wird eine Kurzschließspannung an die Leitung gelegt, wodurch alle Melder, deren Adressenspeicher leer sind, die Leitung mittels ihres Schalters kurzschließen. In einer dritten Phase wird der Leitung ein Meßstrom eingeprägt, und die dadurch am ersten Melder mit geschlossenem Schalter abfallende Spannung wird von der Spannungsmeßeinrichtung ermittelt. Ihr Wert wird in dem Meßwertspeicher gespeichert. In einer vierten Phase wird eine Abfragespannung an die Leitung gelegt, wodurch der Melder, dessen Meßwertspeicher belegt ist, dessen Adressspeicher aber leer ist, kommunikationsfähig wird und von der Zentrale eine Adresse zugeteilt bekommt, die im Adressspeicher abgelegt wird. Dieser Vorgang wird so oft wiederholt, bis alle Melder mit Adressen versehen sind.

Aus DE 4 426 466 A1 ist eine Anordnung zum Betreiben von Gefahrenmeldern bekannt geworden, bei der die Gefahrenmelder an einer als zweiadrige Primärleitung ausgebildeten Meldeschleife einer Zentrale einer Gefahrenmeldeanlage angeschlossen sind, wobei in der Primärleitung zumindest zwei Trennelemente mit einer Signaleauswerte- und -steuereinrichtung sowie mit mindestens einem Schaltelement in einer der Leitungsadern angeordnet sind. Es sind ferner Grenzwertmelder vorgesehen, die keine eigene Adresse aufweisen. Die Trennelemente sind adressierbar und so in der Primärleitung angeordnet, daß zumindest drei Leitungsabschnitte mit einer jeweiligen Meldegruppe gebildet sind und dadurch jeder Meldegruppe eine Kollektivadresse zugeordnet ist, wobei im Alarmfall die Kollektivadresse des alarmauslösenden Melders ermittelbar ist.

Aus der DE 4 322 841 C2 ist an der Gefahrenmeldeanlage bekannt geworden, mit einer Vielzahl von Meldern, die über wenigstens eine mehreren Meldern gemeinsame mehradrige Leitungsschleife an eine die Melder von einem Abfrageende der Leitungsschleife her zyklisch abfragende Zentrale angeschlossen sind. Die Zentrale legt eine zur Kettensynchronisierung der Melder zyklisch sich ändernde Linienspannung an das Abfrageende der Leitungsschleife an. Jeder Melder umfaßt Linienspannungs-Überwachungsmittel sowie einen von den Linienspannungs-Überwachungsmitteln gesteuerten Schalter in Reihe zu einer der Adern der

Leitungsschleife, wobei der Schalter auf eine Synchronisierungsänderung der Linienspannung hin verzögert schließt sowie einen Meldeinformationsimpuls an das Abfrageende der Leitungsschleife abgibt. Die Zentrale und/oder die Melder umfassen einen auf Aderbruch und/oder Aderkurzschluß der Leitungsschleife ansprechende Leitungsstörung-Überwachungsmittel, und die Zentrale fragt im Falle einer Leitungstörung den Melder von beiden Abfrageenden der Leitungsschleife her ab. Die Zentrale fragt bereits in demselben Zyklus, in dem Leitungsstörung-Überwachungsmittel die Leitungsstörung bei Abfrage von einer der beiden Abfrageende her erstmals erkennen, die Leitungsschleife auch vom anderen der beiden Abfrageenden her ab. Mit einer derartigen Gefahrenmeldeanlage soll trotz einer eventuellen Leitungsstörung die Abfrage sämtlicher Melder ohne Verlängerung der hierfür erforderlichen Zykluszeitspanne möglich sein.

Der Erfindung liegt die Aufgabe zugrunde, ein Verfahren zur Bestimmung von als Stromsenken wirkenden gestörten Meldern in einer Gefahrenmeldeanlage anzugeben, mit dem ein derart gestörter Melder automatisch identifiziert werden kann.

Diese Aufgabe wird durch die Merkmale des Patentanspruchs 1 oder 6 gelöst.

Die Erfindung geht davon aus, daß üblicherweise die Melder bei Gefahrenmeldeanlagen strommoduliert arbeiten, mithin im Betrieb Stromsenken darstellen. Es versteht sich, daß in diesem Fall Störungen, die ihrerseits eine Stromsenke bewirken, bereits dann die Kommunikation beeinträchtigen können, wenn die Störung in der Größenordnung der Amplitude der übertragenen Daten liegt. Mithin soll mit dem erfindungsgemäßen Verfahren nicht der Kurzschluß eines Melders detektiert werden, wozu andere einfache Verfahren denkbar sind, sondern solche Störungen von Meldern, die zumeist aufgrund des Langzeitbetriebs auftreten und die Datenkommunikation so weit stören, daß eine einwandfreie Übertragung zumindest vom Melder zur Zentrale nicht mehr möglich ist. Ist eine solche Störung bei einem Melder in einer Linie aufgetreten, ist klar, daß auch die Kommunikation mit den Meldern, die auf der der Zentrale abgewandten Seite des gestörten Melders liegen, nicht mehr zufriedenstellend bzw. gestört ist.

Das erfindungsgemäße Verfahren ist daher insbesondere vorteilhaft auf Übertragungssysteme nach dem Master-Slave-Prinzip anwendbar. Es versteht sich, daß auch andere Übertragungssysteme in Frage kommen, so weit die Melder der Gefahrenmeldeanlage im Betrieb als Stromsenken wirken.

Bei dem Verfahren nach Anspruch 1 stellt die Zentrale fest, wenn aufgrund einer Abfrage eines Melders gestörte Daten die Zentrale erreichen. In diesem Fall sendet die Zentrale ein Spannungssignal, vorzugsweise ein spannungsmoduliertes Datenwort, auf die Meldeleitung. Dies veranlaßt alle Melder, ihre Schalter zu schließen. Die Erkennung des entsprechenden Datenworts erfolgt über den Meßwiderstand und die Auswerteeinheit, welche von einer Logikschaltung gebildet sein kann. Diese steuert den Schalter, beispielsweise ein FET an und schließt diesen. Damit ist die Meldeleitung am Ort jedes Melders kurzgeschlossen. Anschließend prägt die Zentrale der Meldeleitung einen vorgegebenen Strom ein, der jedoch nur am nächstliegenden, d. h. ersten Melder über seinen Meßwiderstand meßbar ist. Außerdem wird die Stromaufnahme des Melders gemessen. Der Stromwert wird in einem Meßwertspeicher abgelegt und mit einem vorgegebenen maximalen Strom verglichen. Ist der gemessene Strom kleiner als der maximale Wert und wird der eingeprägte Strom über den Meßwiderstand ermittelt, erzeugt die Auswertevorrichtung ein Öffnungssignal für den Schalter. Dadurch wird ein Spannungssprung verursacht, der mit Hilfe einer Spannungsmeßvorrichtung in der Zentrale dahingehend ausgewertet werden kann, daß der erste Melder von der Zentrale aus gesehen eine Stromaufnahme im zulässigen Bereich hat. Durch Öffnen des Schalters im ersten Melder fällt auch beim zweiten Melder aufgrund des eingeprägten Stroms über seinen Meßwiderstand eine meßbare Spannung ab. Es läuft dann der gleiche Vorgang ab wie zum ersten Melder beschrieben. Überschreitet jedoch der gemessene Strom den maximalen Wert, bleibt der Schalter geschlossen. Die Zentrale kann feststellen, daß innerhalb eines bestimmten Intervalls oder einer bestimmten Zeit kein weiterer Spannungssprung auf der Meldeleitung erzeugt worden ist. Dies ist dann ein Zeichen dafür, daß bei dem betreffenden Melder eine unzulässig hohe Stromsenke vorliegt, welche für die Störung der Kommunikation im Datenverkehr zwischen Zentrale und Melder verantwortlich sein kann.

Liegt die Meldeleitung in Form einer Ringleitung vor, kann nunmehr von dem anderen Ende der Ringleitung her in gleicher Weise verfahren werden bis zum gestörten Melder. Liegt hingegen eine Stichleitung vor, könnte der beschriebene Störtest abgebrochen werden. Es ist jedoch auch denkbar, über die Zentrale dem Melder, dessen Schalter geschlossen geblieben ist, nach einer vorgegebenen zweiten Zeit einen Befehl zu erteilen, den Schalter zu öffnen. Danach kann dann das beschriebene Testverfahren bis zum Ende durchgeführt werden oder bis zu einem weiteren Melder, der eine unzulässige Stromsenke darstellt.

Eine zusätzliche Sicherheit bei dem beschriebenen Verfahren wird nach einer Ausgestaltung der Erfindung erreicht, wenn die Zentrale nach Eingang gestörter Daten eine Störinformation auf die Meldeleitung gibt, die in einen Störspeicher aller Melder eingeschrieben wird. Wird dann von der Zentrale der Befehl erteilt, daß alle Schalter geschlossen werden sollen, dann wird in den jeweiligen Meldern festgestellt, ob der Störspeicher belegt ist. Nur wenn der Störspeicher belegt ist, erfolgt auch ein Schließen des Schalters.

Das oben beschriebene Verfahren ist insbesondere anwendbar, wenn die Kommunikation zwischen Melder und Zentrale gestört ist, umgekehrt jedoch noch eine Datenübertragung möglich ist. Es sind jedoch auch Störungen denkbar, bei denen der Datenverkehr auch zwischen Zentrale und Melder gestört ist und der Verdacht besteht, daß die Störung auf einer unzulässigen Stromsenke beruht. Eine Lösung der Aufgabe ist in Patentanspruch 6 angegeben, wobei jedoch unterstellt wird, daß die Versorgung der Melder mit der für ihren Betrieb notwendigen elektrischen Energie nicht betroffen ist. Wie bereits angemerkt, können Kurzschlußfälle auch auf andere Weise detektiert werden.

Bei dem Verfahren nach Patentanspruch 6 legt ein Melder ein Störsignal in einem Störspeicher ab, wenn er innerhalb eines vorgegebenen Zeitintervalls kein Abfragesignal von der Zentrale erhalten hat. Üblicherweise ist der Betrieb von Gefahrenmeldeanlagen derart, daß die einzelnen Melder zyklisch auf ihren Zustand abgefragt werden und nicht willkürlich Signale an die Zentrale senden. Es ist daher möglich, in jedem Melder eine Schaltung zu installieren, die feststellt, ob innerhalb einer vorgegebenen Zeit eine Abfrage stattgefunden hat. Dies ist insbesondere bei Meldern leicht der Fall, die einen Mikroprozessor enthalten und daher entsprechend programmiert werden können. In diesem Fall legt der Melder in seinem Störspeicher ein Störsignal ab, und die Zentrale sendet bei Ausbleiben eines Antwortsignals ein Spannungssignal (Datenwort), mit dem die Störspeicher der empfangsfähigen Melder belegt werden. Dadurch sind dann alle Störspeicher der Melder eines Melderringes oder einer -stichleitung belegt, und die Identifizierung der gestörten Melder kann beginnen. Die Zentrale erzeugt ein Spannungssignal, etwa durch Anlegen einer bestimmten Spannung oder durch Ausschalten und Wiedereinschalten der Versorgungsspannung. Dies wird von den Meldern dahingehend interpretiert, daß ihre Schalter geschlossen werden sollen. Der weitere Ablauf des Verfahrens gleicht dem nach Anspruch 1.

Eine vorteilhafte Schaltungsanordnung für eine Gefahrenmeldeanlage zur Durchführung des Verfahrens nach Patentanspruch 1 oder 6 ist in Patentanspruch 8 angegeben.

Mit Hilfe von Gefahrenmeldeanlagen, in denen die einzelnen Melder die Adern einer Meldeleitung verbindende Schalter aufweisen, ist es auch möglich, als unzulässige Stromsenken wirkende Melder aus einer Linie zu trennen. An sich sind sog. Kurzschlußtrenner bekannt. Aus verschiedenen Gründen kann der Schwellenwert zum Ansprechen derartiger Kurzschlußtrenner nicht so niedrig gewählt werden, daß gestörte Melder, die einen unzulässig hohen Strom ziehen, automatisch von der Leitung getrennt werden. Daher sieht eine Ausgestaltung der Erfindung vor, daß die Stromaufnahme der Melder gemessen und mit einem Sollwert verglichen wird, bei denen im Speicher ein Störsignal abgelegt ist. Die Zentrale kann durch Ausbleiben eines Antwortsignals eine Störung feststellen, wie auch ein Melder seine Störung oder eine in der Leitung liegende Störung feststellen kann, wenn er innerhalb eines Zyklus kein Abfragesignal erhalten hat. Ergibt der Stromwertvergleich, daß die Stromaufnahme eines Melders einen vorgegebenen Wert überschreitet, wird durch Schließen des erwähnten Schalters ein Kurzschluß zwischen den Adern der Meldeleitung erzeugt. Dieser bleibt lange genug aufrecht erhalten, um den Ansprechschwellwert des Kurzschlußtrennglieds zu erreichen, das dann daraufhin mindestens eine der Adern auftrennt.

Gemäß behördlichen Vorschriften müssen zwischen zwei aufeinander folgenden Kurzschlußtrenngliedern mindestens 32 Melder liegen. Befindet sich ein auf diese Weise als unzulässige Stromsenke wirkender Melder zwischen zwei Kurzschlußtrenngliedern, kann mit Hilfe des erzeugten Kurzschlußstromes ein Ansprechen beider benachbarten Trennglieder erzeugt werden. Der ohnehin vorhandene Kondensator in den Meldern dient als Energiequelle, um auch nach Schließen des Schalters bis zur Aktivierung beider Kurzschlußtrennglieder die Schaltungsfunktionen des Melders aufrecht zu erhalten.

Bei Installation einer Stichleitung können darauf hin alle Melder, die zwischen Zentrale und dem ersten seinen Schalter öffnenden Kurzschlußtrennglied liegen, zur Wiederaufnahme des Datenverkehrs mit der Zentrale und damit zur Aufnahme ihrer Überwachungsfunktion veranlaßt werden. Bei Installation eines Melderinges ist es bei zweiseitiger Einspeisung sogar möglich, entweder jeweils einen an den Einspeiseseiten der Zentrale oder einen im mittleren Bereich des Ringes sich befindenden Leitungsabschnitt mit den den Datenverkehr störenden Meldern heraus zu trennen. Alle Leitungsabschnitte mit intakten Meldern können ihre Funktion weiter erfüllen bzw. dazu veranlaßt werden.

Die Erfindung wird nachfolgend anhand eines in Zeichnungen dargestellten Ausführungsbeispiels näher erläutert.
- Fig. 1: zeigt schematisch eine Schaltungsanordnung einer Gefahrenmeldeanlage nach der Erfindung.
- Fig. 2: zeigt eine andere Ausführungsform eines Meldeaufbaus der Gefahrenmeldeanlage nach Fig. 1.

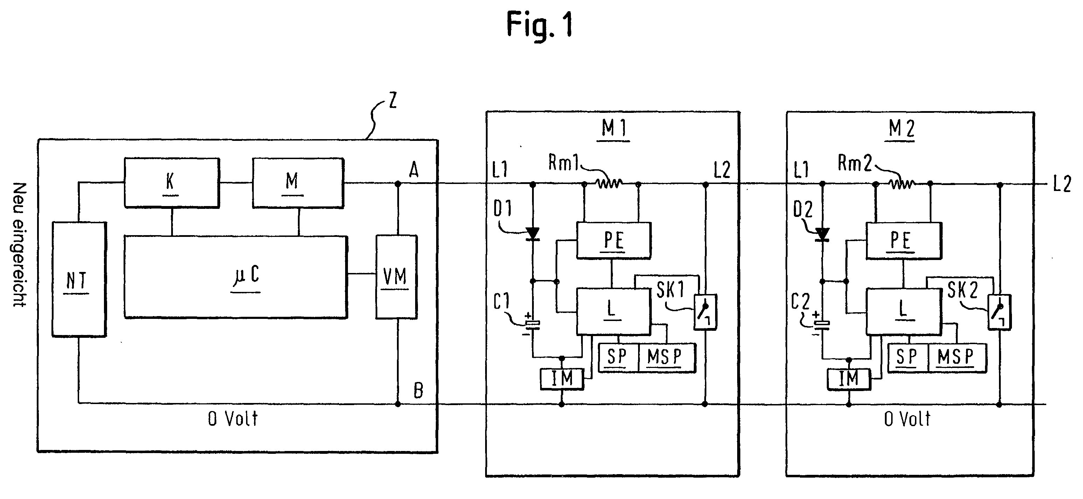

In Fig. 1 ist eine Zentrale Z einer Gefahrenmeldeanlage, beispielsweise einer Brandmeldeanlage, dargestellt, mit der eine Übertragungsleitung verbunden ist mit den Adern A und B. Die Übertragungsleitung kann eine Stich- oder eine Ringleitung sein, wie dies an sich bekannt ist. Die Zentrale weist eine Spannungsversorgung in Form eines Netzteils NT, einen Mikroprozessor µC, eine Konstantstromquelle K, einen Modulator M und eine Spannungsmeßeinrichtung VM auf. Auf die Funktion der einzelnen Bausteine wird weiter unten noch eingegangen.

An die Übertragungsleitung ist eine Vielzahl von Meldern angeschlossen, beispielsweise 128. In Fig. 1 sind jedoch lediglich zwei Melder M1 und M2 dargestellt. Jeder enthält einen Widerstand Rm1 bzw. Rm2 im Zuge einer Ader, einen Kondensator C1, C2 in Reihe mit einer Diode D1 bzw. D2 zwischen den Adern, einen steuerbaren Schalter SK1 bzw. SK2, einen Pulsempfänger PE, eine Logikschaltung L, einen Störspeicher SP, einen Meßspeicher MSP und eine Spannungsmeßeinrichtung IM. Letztere Bauteile sind jeweils mit der Logikschaltung verbunden, und der Schalter SK1 wird von der Logikschaltung L angesteuert. Die Meßeinrichtung IM mißt die Stromaufnahme jedes Melders M1, M2. Jeder Melder enthält im praktischen Fall eine Reihe weiterer Bauelemente, die für seinen Betrieb erforderlich sind. Auf diese wird jedoch im einzelnen nicht eingegangen, da dies für die Identifizierung eines gestörten Melders nicht notwendig ist.

Nachfolgend wird die Wirkungsweise des erfindungsgemäßen Verfahrens anhand von Fig. 1 erläutert für den Fall, daß die Kommunikation zwischen den Meldern und der Zentrale gestört ist, nicht jedoch die von der Zentrale zu den Meldern.

Durch einen nicht weiter dargestellten Prozeß stellt die Zentrale Z fest, daß die spannungsmodulierten Daten von der Zentrale Z die Melder M1, M2 ... erreicht, die strommodulierten Daten der Melder M1, M2 jedoch durch eine zu hohe Stromaufnahme verfälscht werden oder teilweise ausbleiben. Es ist möglich, diese Störinformation durch einen ebenfalls nicht näher beschriebenen Vorgang, der aus dem Stand der Technik bekannt ist, in den Störspeicher SP einzuschreiben. In der Meßeinrichtung IM findet eine Strommessung statt, die automatisch ablaufen kann oder auf Befehl der Zentrale Z. Mit Hilfe der Logikschaltung L wird in dem Meßspeicher MSP der gemessene Stromwert abgelegt. Die Zentrale Z sendet per spannungsmoduliertem Datenwort einen Befehl an die Melder M1, M2 ..., damit diese ihre Schalter SK1, SK2 ... schließen. Der Kondensator C dient ab jetzt als Energiespeicher für den Betrieb der gezeigten Bauteile und die Durchführung der nachfolgenden Verfahrensschritte.

Bevor die Schalter SK1, SK2 geschlossen werden, wird geprüft, ob die Störspeicher SP belegt sind. Ist dies der Fall, findet kein Schließen des zugeordneten Schalters statt. Dies ist jedoch eine Sicherheitsmaßnahme, die grundsätzlich nicht erforderlich ist. Die Zentrale Z prägt nun einen Strom auf die Meldeleitung auf, der jedoch nur an Rm1 einen Spannungsabfall erzeugt, da die übrigen Melder kurzgeschlossen sind. Der Strom ist über den Pulsempfänger PE meßbar, und seine Information wird an die Logikschaltung L weitergegeben. Die Logikschaltung stellt fest, ob ein Strom gemessen wird und außerdem, ob der im Meßwertspeicher MSP abgelegte Strommeßwert unterhalb oder oberhalb eines programmierten maximalen Stromwerts ist. Befindet sich der gemessene Stromwert unterhalb des maximalen Wertes, öffnet die Logikschaltung L den zugeordneten Speicher SK1. Damit wird an der Zentrale Z ein Spannungssprung verursacht, der mit Hilfe der Spannungsmeßeinrichtung VM dahingehend ausgewertet werden kann, daß der erste Melder M1 eine Stromaufnahme im zulässigen Bereich hat. Durch Öffnen des Schalters SK1 wird nunmehr über den Widerstand Rm2 eine meßbare Spannung erzeugt. Wird in diesem Fall festgestellt, daß der im Speicher MSP abgelegte Strommeßwert einen Höchstwert überschreitet, erzeugt die Logikschaltung L kein Signal zum Öffnen des Schalters SK2 und somit auch keinen Spannungssprung an den Klemmen der Zentrale Z. Dies kann von der Zentrale Z dahingehend ausgewertet werden, daß der zweite Melder SK2 eine unzulässige Stromsenke darstellt und somit die Ursache für die Störung der Kommunikation im Datenverkehr.

Wird keine weitere Vorkehrung unternommen, ist damit das Testverfahren abgeschlossen. Es ist aber auch denkbar, den Schalter SK2 nach Ablauf einer weiteren Zeitspanne zu öffnen mit Hilfe eines von der Zentrale Z ausgehenden Befehls, wonach dann in der beschriebenen Weise die weiteren Melder getestet werden können. Durch Zählung der Spannungssprünge in der Zentrale kann mithin ein gestörter Melder eindeutig als unzulässige Stromsenke identifiziert werden.

Ist auch die Kommunikation von der Zentrale zu den Meldern gestört, bleibt jedoch die Spannungsversorgung aufrecht erhalten, wird folgendes Verfahren angewendet. Dabei kann dieses Verfahren alternativ zum zuerst beschriebenen Verfahren angewendet werden oder auch zusätzlich.

Mit Hilfe einer geeigneten Schaltung, beispielsweise eines Mikroprozessors, in den Meldern M1, M2... läßt sich feststellen, ob die Melder nach einem vorgegebenen Zyklus Abfragesignale von der Zentrale Z erhalten. Ist dies wegen der gestörten Kommunikation nicht der Fall, wird im Störspeicher SP ein Störsignal abgelegt. Außerdem wird ebenfalls der Strom gemessen und im Meßspeicher abgelegt. Die Zentrale Z erhält trotz Erzeugung eines Abfragesignals vom betreffenden Melder keine Antwort und schließt daraus, daß eine Störung vorliegt. Nunmehr wird von der Zentrale Z ein Datenwort auf die Leitung gegeben. Damit werden dann alle Störspeicher belegt, die nicht schon belegt waren. Anschließend wird ein Spannungssignal von der Zentrale erzeugt. Dies kann auch in der Weise geschehen, daß die Versorgungsspannung abgeschaltet und wieder eingeschaltet wird. Dies wird von den Meldern M1, M2 dahingehend interpretiert, daß ihre Schalter SK1 geschlossen werden sollen. Nachdem dieser Vorgang abgeschlossen ist, wird von der Zentrale wieder ein eingeprägter Strom erzeugt, und das Testverfahren läuft in gleicher Weise ab, wie es oben beschrieben worden ist.

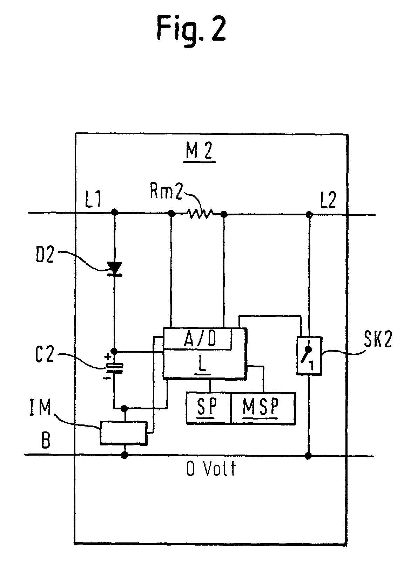

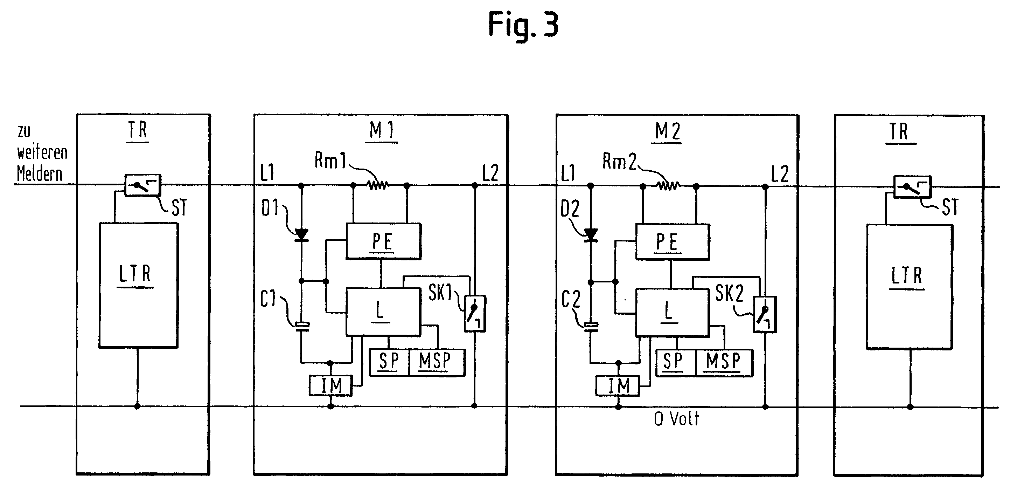

In Fig. 2 ist ein Melder dargestellt, der im wesentlichen die gleichen Bauelemente aufweist wie die Melder M1 und M2 nach Fig. 1. Wie erkennbar, ist anstelle des Pulsempfängers PE eine Logikschalter L dargestellt mit einem integrierten A/D-Wandler. Es handelt sich hierbei um "Komponenten" eines üblicherweise im Melder eingebauten Mikroprozessors, dessen A/D-Wandler und dessen Programm die am Meßwiderstand Rm abfallenden Spannungen mit vorgegebenen digitalen Werten vergleicht. Das daraus entstehende Datenwort wird entsprechend interpretiert.

## Patentansprüche

1. Verfahren zur Bestimmung von als Stromsenken wirkenden gestörten Meldern in einer Gefahrenmeldeanlage, die eine Zentrale (Z) und mindestens eine damit verbundene zweiadrige Meldeleitung (A, B) umfaßt, an die eine Vielzahl von Meldern (M1, M2) angeschlossen ist, wobei jeder Melder (M1, M2) einen Kondensator (C1) zur Energiespeicherung, einen in einer Ader liegenden Meßwiderstand (Rm1, Rm2), einen den Spannungsabfall am Meßwiderstand (Rm1, Rm2) auswertende Auswertevorrichtung, einen Adressspeicher und einen von der Auswertevorrichtung steuerbaren Schalter (SK1, SK2) zwischen den Adern (A, B) aufweist mit den folgenden Verfahrensschritten:
- die Zentrale (Z) sendet zyklisch spannungsmodulierte digitale Steuer- und Abfragedaten an die Melder (M1, M2), und die Melder senden bei Abfrage durch die Zentrale (Z) strommodulierte digitale Daten an die Zentrale (Z),
- bei Empfang von gestörten Daten bei der Abfrage durch die Zentrale (Z) sendet diese ein Spannungssignal an die Melder (M1, M2) zum Schließen der Schalter (SK1, SK2) aller Melder (M1, M2),
- vorher, gleichzeitig oder danach wird die Stromaufnahme der Melder (M1, M2) gemessen und in einem Meßspeicher (MSP) abgelegt,
- die Zentrale (Z) gibt anschließend einen eingeprägten Strom vorgegebener Größe auf die Leitung und
- die Auswertevorrichtung öffnet den Schalter (SKI, SK2), wenn die Stromaufnahme einen vorgegebenen Meßwert nicht überschreitet und die am Meßwiderstand (Rm1, Rm2) abfallende Spannung einen vorgegebenen Wert erreicht,
- der jeweils nächstfolgende Melder (M1, M2) öffnet ebenfalls den Schalter (SK1, SK2), wenn die an seinem Meßwiderstand (Rm1, Rm2) abfallende Spannung ihren vorgegebenen Wert erreicht und die Stromaufnahme den vorgegebenen Maximalwert nicht übersteigt,
- die Zentrale (Z) ermittelt den Melder (M1, M2), dessen Schalter (SK1, SK2) zumindest vorübergehend geschlossen geblieben ist.

2. Verfahren nach Anspruch 1, **dadurch gekennzeichnet, daß** das Spannungssignal spannungsmoduliert ist.

3. Verfahren nach Anspruch 1 oder 2, **dadurch gekennzeichnet, daß** die Zentrale (Z) die Spannungssprünge beim Öffnen der Melderschalter (SK1, SK2) ermittelt und einen gestörten Melder (M1, M2) identifiziert durch Ausbleiben eines Spannungssprunges nach dem letzten Spannungssprung innerhalb einer vorgegebenen ersten Zeit.

4. Verfahren nach Anspruch 3, **dadurch gekennzeichnet, daß** die Zentrale (Z) nach Ablauf der ersten Zeit nach einer vorgegebenen zweiten Zeit einen Befehl zum Öffnen des Schalters (SK1, SK2) des als gestört ermittelten Melders (M1, M2) erzeugt.

5. Verfahren nach einem der Ansprüche 1 bis 4, **dadurch gekennzeichnet, daß** die Zentrale (Z) nach Eingang gestörter Daten eine Störinformation in einen Störspeicher (SP) aller Melder (M1, M2) einschreibt und das Öffnen des Schalters (SK1, SK2) nur erfolgt, wenn der Störspeicher (SP) des betreffenden Melders belegt ist.

6. Verfahren zur Bestimmung von als Stromsenken wirkenden gestörten Meldern in einer Gefahrenmeldeanlage, die eine Zentrale (Z) und mindestens eine damit verbundene zweiadrige Meldeleitung (A, B) umfaßt, an die eine Vielzahl von Meldern (M1, M2) angeschlossen ist, wobei jeder Melder (M1, M2) einen Kondensator (C1) zur Energiespeicherung, einen in einer Ader liegenden Meßwiderstand (Rm1, Rm2), eine den Spannungsabfall am Meßwiderstand auswertende Auswertevorrichtung, einen Adressspeicher und einen von der Auswertevorrichtung steuerbaren Schalter (SK1, SK2) zwischen den Adern (A, B) aufweist, mit den folgenden Verfahrensschritten:
- die Zentrale (Z) sendet zyklisch spannungsmodulierte digitale Steuer- und Abfragedaten an die Melder (M1, M2), und die Melder (M1, M2) senden bei Abfrage durch die Zentrale (Z) strommodulierte digitale Daten an die Zentrale (Z),
- ein Melder (M1, M2) legt ein Steuersignal in einem Störspeicher (SP) ab, wenn er innerhalb eines vorgegebenen Intervalls kein Abfragesignal von der Zentrale (Z) erhält,
- bei Ausbleiben eines Antwortsignals von einem Melder (M1, M2) sendet die Zentrale (Z) ein Spannungssignal (Datenwort), mit dem die Störspeicher (SP) der empfangsfähigen Melder (M1, M2) belegt werden,
- die Melder (M1, M2) messen ihre Stromaufnahme und vergleichen sie mit einem vorgegebenen Höchstwert,
- die Zentrale (Z) erzeugt ein Spannungssignal zum Schließen der Schalter (SK1, SK2) aller Melder (M1, M2), wobei nur die Schalter der Melder (M1, M2) geschlossen werden,
- die Zentrale (Z) gibt anschließend einen eingeprägten Strom vorgegebener Größe auf die Leitung und
- die Auswertevorrichtung öffnet den Schalter (SK1, SK2), wenn die Stromaufnahme einen vorgegebenen Höchstwert nicht überschreitet und die am Meßwiderstand (Rm1, Rm2) abfallende Spannung einen vorgegebenen Wert erreicht,
- der jeweils nächst folgende Melder (M1, M2) öffnet ebenfalls den Schalter (SK1, SK2), wenn die am Meßwiderstand (Rm1, Rm2) abfallende Spannung ihren vorgegebenen Wert erreicht und die Stromaufnahme den vorgegebenen Maximalwert nicht übersteigt,
- die Zentrale (Z) ermittelt den Melder (M1, M2), dessen Schalter (SK1, SK2) zumindest vorübergehend geschlossen geblieben ist.

7. Verfahren nach Anspruch 6, **dadurch gekennzeichnet, daß** das Spannungssignal durch Abschalten und erneutes Einschalten der Versorgungsspannung erzeugt wird.

8. Schaltungsanordnung zur Bestimmung von als Stromsenken wirkenden gestörten Meldern in eine Gefahrenmeldeanlage zur Durchführung des Verfahrens nach einem der Ansprüche 1 bis 6, mit
- einer Zentrale (Z), die eine Spannungsversorgung (NT), einen Mikroprozessor (µC), eine Konstantstromquelle (K), einen Modulator (M) und eine Spannungsmeßvorrichtung (VM) aufweist
- einer Vielzahl von Meldern (M1, M2 ...), die an einer zweiadrigen mit der Zentrale (Z) verbundenen Melderleitung (A, B) angeschlossen ist, wobei
- jeder Melder (M1, M2) einen zwischen den Adern (A, B) in Reihe mit einer Diode (D1, D2 ...) geschalteten Kondensator (C1, C2), einen steuerbaren Schalter (SK1, SK2) zwischen den Adern (A, B), einen in Reihe mit einer Ader (A) liegenden Meßwiderstand (Rm1, Rm2), einen an den Meßwiderstand (Rm1, Rm2) angeschlossenen Pulsempfänger (PE) und eine Logikschaltung (L) aufweist, wobei eine Strommeßvorrichtung (IM), ein Störspeicher (SP) und ein Meßspeicher (MSP) sowie der Pulsempfänger (PE) und der Schalter (SK1, SK2) mit der Logikschaltung (L) verbunden sind.

9. Schaltungsanordnung nach Anspruch 8, **dadurch gekennzeichnet, daß** als Schalter ein Halbleiterschalter, vorzugsweise ein FET, vorgesehen ist und das Verhältnis des Widerstands vom Meßwiderstand (Rm1, Rm2 ...) zum Widerstandswert des durchgeschalteten Halbleiterschalters größer als 10 : 1 ist.

10. Schaltungsanordnung nach Anspruch 8 oder 9, **dadurch gekennzeichnet, daß** der Melder (M1, M2) einen Mikroprozessor enthält und der Pulsempfänger von dem A/D-Wandler sowie vom Programm des Mikroprozessors gebildet ist.

## Claims

1. A process to determine malfunctioning detectors acting as current sinks in a danger signaling system which comprises a control centre (Z) and at least a two-wire signaling line (A, B) joined thereto to which a multiplicity of detectors (M1, M2) is connected wherein each detector (M1, M2) has a capacitor (C1) for energy storage, a measuring resistor (Rm1, Rm2) interposed in a wire, an evaluation device analyzing the voltage drop on the measuring resistor (Rm1, Rm2), an address memory, and a switch (SK1, SK2) adapted to be controlled by the evaluation device between the wires (A, B), comprising the following process steps:
- The control centre (Z) cyclically emits voltage-modulated digital control and interrogation data to the detectors (M1, M2), and the detectors when interrogated by the control centre (Z) emit current-modulated digital data to the control centre (Z),
- If faulty data are received following an interrogation by the control centre (Z) this one emits a voltage signal to the detectors (M1, M2) for closing the switches (SK1, SK2) of all detectors (M1, M2),
- The power input of the detectors (M1, M2) is measured and saved in a measured-value memory (MSP) before, simultaneously or afterwards,
- The control centre (Z) subsequently provides an impressed current of a preset magnitude to the line and
- The evaluation device opens the switch (SK1, SK2) if the power input does not exceed a preset measured value and the voltage dropping on the measuring resistor (Rm1, Rm2) reaches a preset value,
- The detector (M1, M2) next in succession also opens the switch (SK1, SK2) if the voltage dropping on its measuring resistor (Rm1, Rm2) reaches its preset value and the power input does not exceed the preset maximum,
- The control centre (Z) determines the detector (M1, M2) the switch (SK1, SK2) of which has remained closed at least temporarily.

2. The process according to claim 1, **characterized in that** the voltage signal is of a modulated voltage.

3. The process according to claim 1 or 2, **characterized in that** the control centre (Z) determines the voltage jumps in opening the detector switches (SK1, SK2) and identifies a malfunctioning detector (M1, M2) by its failure to effect a voltage jump after the last voltage jump within a preset first period.

4. The process according to claim 3, **characterized in that** the control centre (Z), upon the lapse of the first period, generates an instruction to open the switch (SK1, SK2) of the detector (M1, M2) found to be in a malfunction after a preset second period.

5. The process according to any one of claims 1 to 4, **characterized in that** the control centre (Z), upon the arrival of faulty data, inscribes a malfunction information in a malfunction memory (SP) of all detectors (M1, M2), and that the switch (SK1, SK2) will be opened only if the malfunction memory (SP) of the detector (M1, M2) concerned is occupied.

6. A process to determine malfunctioning detectors acting as current sinks in a danger signaling system which comprises a control centre (Z) and at least a two-wire signaling line (A, B) joined thereto to which a multiplicity of detectors (M1, M2) is connected wherein each detector (M1, M2) has a capacitor (C1) for energy storage, a measuring resistor (Rm1, Rm2) interposed in a wire, an evaluation device analyzing the voltage drop on the measuring resistor (Rm1, Rm2), an address memory, and a switch (SK1, SK2) adapted to be controlled by the evaluation device between the wires (A, B), comprising the following process steps:
- The control centre (Z) cyclically emits voltage-modulated digital control and interrogation data to the detectors (M1, M2), and the detectors (M1, M2) when interrogated by the control centre (Z) emit current-modulated digital data to the control centre (Z),
- The detector (M1, M2) saves a control signal in a malfunction memory (SP) if it does not receive any interrogation signal from the control centre (Z) within a preset interval,
- If no reply signal is received from a detector (M1, M2) the control centre (Z) emits a voltage signal (a data word) by which the malfunction memories (SP) of the detectors (M1, M2) capable of reception are occupied,
- The detectors (M1, M2) measure their power input and compare it to the preset maximum,
- The control centre (Z) generates a voltage signal for closing the switches (SK1, SK2) of all detectors (M1, M2) with only the switches (SK1, SK2) of the detectors (M1, M2) being closed,
- The control centre (Z) subsequently provides an impressed current of a preset magnitude to the line and
- The evaluation device opens the switch (SK1, SK2) if the power input does not exceed a preset maximum and the voltage dropping on the measuring resistor (Rm1, Rm2) reaches a preset value,
- The detector (M1, M2) next in succession also opens the switch (SK1, SK2) if the voltage dropping on its measuring resistor (Rm1, Rm2) reaches its preset value and the power input does not exceed the preset maximum, etc.,
- The control centre (Z) determines the detector (M1, M2) the switch of which has remained closed at least temporarily.

7. The process according to claim 6, **characterized in that** the voltage signal is generated by turning the supply voltage off and turning it on again.

8. A circuit arrangement to determine malfunctioning detectors acting as current sinks in a danger signaling system to carry out the process according to any one of claims 1 to 6, comprising:
- a control centre (Z) which includes a voltage supply (NT), a microprocessor (µC), a constant-power source (K), a modulator (M), and a voltage measuring device (VM),
- a multiplicity of detectors (M1, M2 ...), which are connected to a two-wire detector line (A, B) joined to the control centre (Z) wherein
- each detector (M1, M2) has a capacitor (C1, C2) connected in series with a diode (D1, D2 ...) between the wires (A, B), a switch (SK1, SK2) adapted to be controlled between the wires (A, B), a measuring resistor (Rm1, Rm2) disposed in series with a wire (A), a pulse receiver (PE) connected to the measuring resistor (Rm1, Rm2), and a logic circuit (L), wherein a current measuring device (IM), a malfunction memory (SP), and a measuring memory (MSP) as well as the pulse receiver (PE) and the switch (SK1, SK2) are joined to the logic circuit (L).

9. The circuit arrangement according to claim 8, **characterized in that** a semiconductor switch, preferably a FET, is provided as a switch and the ratio of resistance from the measuring resistor (Rm1, Rm2 ...) to the resistance value of the stepped-through semiconductor switch is larger than 10 : 1.

10. The circuit arrangement according to claim 8 or 9, **characterized in that** the detector (M1, M2) includes a microprocessor and the pulse receiver is constituted by the A/D converter and the program of the microprocessor.

## Revendications

1. Procédé pour déterminer des détecteurs défectueux agissant comme puits de courant dans une installation de détection de dangers qui comprend une centrale (Z) et au moins une ligne de signalisation (A, B) bifilaire reliée à celle-ci, ligne à laquelle une multitude de détecteurs (M1, M2) est connectée, chaque détecteur (M1, M2) présentant un condensateur (C1) pour accumuler l'énergie, une résistance de mesure (Rm1, Rm2) située dans un fil, un dispositif d'évaluation évaluant la baisse de tension au niveau de la résistance de mesure (Rm1, Rm2), une mémoire d'adresses et un commutateur (SK1, SK2) entre les fils (A, B) commandable par le dispositif d'évaluation, comprenant les étapes de procédé suivantes :
- la centrale (Z) envoie cycliquement des données de commande et d'interrogation numériques modulées en tension aux détecteurs (M1, M2), et les détecteurs, suite à une interrogation par la centrale (Z), envoient des données numériques modulées en courant à la centrale (Z),
- lors d'une réception de données anormales lors de l'interrogation par la centrale (Z), celle-ci envoie un signal de tension aux détecteurs (M1, M2) pour fermer les commutateurs (SK1, SK2) de tous les détecteurs (M1, M2),
- avant, en même temps ou après, la consommation de courant des détecteurs (M1, M2) est mesurée et stockée dans une mémoire de mesures (MSP),
- la centrale (Z) envoie ensuite sur la ligne un courant appliqué d'une grandeur prédéterminée, et
- le dispositif d'évaluation ouvre le commutateur (SK1, SK2) lorsque la consommation de courant ne dépasse pas une valeur de mesure prédéterminée et que la tension retombant aux bornes de la résistance de mesure (Rm1, Rm2) atteint une valeur prédéterminée,
- le détecteur (M1, M2) respectivement le suivant ouvre également le commutateur (SK1, SK2) lorsque la tension retombant aux bornes de sa résistance de mesure (Rm1, Rm2) atteint sa valeur prédéterminée et que la consommation de courant ne dépasse pas la valeur maximale prédéterminée.
- la centrale (Z) détermine le détecteur (M1, M2) dont le commutateur (SK1, SK2) est resté du moins temporairement fermé.

2. Procédé selon la revendication 1, **caractérisé en ce que** le signal de tension est modulé en tension.

3. Procédé selon la revendication 1 ou 2, **caractérisé en ce que** la centrale (Z) détermine les sauts de tension lors de l'ouverture des commutateurs (SK1, SK2) et identifie un détecteur (M1, M2) défectueux par l'absence d'un saut de tension après le dernier saut de tension à l'intérieur d'une première période prédéterminée.

4. Procédé selon la revendication 3, **caractérisé en ce qu'**après l'écoulement de la première période la centrale (Z) génère après une deuxième période prédéterminée un ordre pour ouvrir le commutateur (SK1, SK2) du détecteur (M1, M2) identifié comme étant défectueux.

5. Procédé selon l'une quelconque des revendications 1 à 4, **caractérisé en ce qu'**après réception de données anormales la centrale (Z) écrit une information d'anomalie dans une mémoire d'anomalies (SP) de tous les détecteurs (M1, M2), et **en ce que** l'ouverture du commutateur (SK1, SK2) ne se produit que si la mémoire d'anomalies (SP) du détecteur concerné est occupée.

6. Procédé pour déterminer des détecteurs défectueux agissant comme puits de courant dans une installation de détection de danger qui comprend une centrale (Z) et au moins une ligne de signalisation (A, B) bifilaire reliée à celle-ci, ligne à laquelle une multitude de détecteurs (M1, M2) est connectée, chaque détecteur (M1, M2) présentant un condensateur (C1) pour accumuler l'énergie, une résistance de mesure (Rm1, Rm2) située dans un fil, un dispositif d'évaluation évaluant la baisse de tension au niveau de la résistance de mesure, une mémoire d'adresses et un commutateur (SK1, SK2) entre les fils (A, B) commandable par le dispositif d'évaluation, comprenant les étapes de procédé suivantes :
- la centrale (Z) envoie cycliquement des données de commande et d'interrogation numériques modulées en tension aux détecteurs (M1, M2), et les détecteurs (M1, M2), suite à une interrogation par la centrale (Z), envoient des données numériques modulées en courant à la centrale (Z),
- un détecteur (M1, M2) stocke un signal de commande dans une mémoire d'anomalies (SP) si pendant un intervalle prédéterminé il ne reçoit pas de signal d'interrogation de la centrale (Z),
- en l'absence d'un signal de réponse d'un détecteur (M1, M2) la centrale (Z) envoie un signal de tension (mot de données) qui est stocké dans les mémoires d'anomalies (SP) des détecteurs (M1, M2) capables de recevoir,
- les détecteurs (M1, M2) mesurent leur consommation de courant et la comparent avec une valeur maximale prédéterminée,
- la centrale (Z) génère un signal de tension pour fermer les commutateurs (SK1, SK2) de tous les détecteurs (M1, M2), seuls les commutateurs des détecteurs (M1, M2) étant fermés,
- la centrale (Z) envoie ensuite sur la ligne un courant indépendant de la charge d'une grandeur prédéterminée, et
- le dispositif d'évaluation ouvre le commutateur (SK1, SK2) lorsque la consommation de courant ne dépasse pas une valeur de mesure maximale prédéterminée et que la tension retombant sur la résistance de mesure (Rm1, Rm2) atteint une valeur prédéterminée,
- le détecteur (M1, M2) respectivement le suivant ouvre également le commutateur (SK1, SK2) lorsque la tension retombant sur la résistance de mesure (Rm1, Rm2) atteint sa valeur prédéterminée et que la consommation de courant ne dépasse pas la valeur maximale prédéterminée,
- la centrale (Z) détermine le détecteur (M1, M2) dont le commutateur (SK1, SK2) est resté du moins temporairement fermé.

7. Procédé selon la revendication 6, **caractérisé en ce que** le signal de tension est généré en coupant et en rallumant la tension d'alimentation.

8. Circuit pour déterminer des détecteurs défectueux agissant comme puits de courant dans une installation de signalisation de dangers, pour la mise en oeuvre du procédé selon l'une des revendications 1 à 6, comprenant
- une centrale (Z) présentant une alimentation en tension (NT), un microprocesseur (µC), une source de courant constant (K), un modulateur (M) et un dispositif de mesure de tension (VM),
- une multitude de détecteurs (M1, M2 ...) connectée à une ligne de signalisation (A, B) bifilaire reliée à la centrale (Z),
- chaque détecteur (M1, M2) présentant un condensateur (C1, C2) monté en série avec une diode (D1, D2 ...) entre les fils (A, B), un commutateur (SK1, SK2) commandable entre les fils (A, B), une résistance de mesure (Rm1, Rm2) placée en série avec un fil (A), un récepteur d'impulsions (PE) connecté à une résistance de mesure (Rm1, Rm2) et un circuit logique (L), un dispositif de mesure de courant (IM), une mémoire d'anomalies (SP) et une mémoire de mesures (MSP) ainsi que le récepteur d'impulsions (PE) et le commutateur (SK1, SK2) étant reliés au circuit logique (L).

9. Circuit selon la revendication 8, **caractérisé en ce que** comme commutateur un commutateur à semi-conducteur, de préférence un FET, est prévu, et **en ce que** le rapport entre la résistance de la résistance de mesure (Rm1, Rm2 ...) et la valeur de résistance du commutateur à semi-conducteur dans l'état passant est supérieur à 10 : 1.

10. Circuit selon la revendication 8 ou 9, **caractérisé en ce que** le détecteur (M1, M2) contient un microprocesseur, et **en ce que** le récepteur d'impulsions est constitué d'un convertisseur A/N ainsi que du programme du microprocesseur.
